Europäisches Patentamt

European Patent Office

Office européen des brevets

(11) Veröffentlichungsnummer: **0 327 810**
**A2**

(12) **EUROPÄISCHE PATENTANMELDUNG**

(21) Anmeldenummer: 89100293.3

(22) Anmeldetag: 10.01.89

(51) Int. Cl.⁴: **B60G 15/06** , **B60G 11/52** ,
**F16F 1/38**

(30) Priorität: 09.02.88 DE 8801613 U

(43) Veröffentlichungstag der Anmeldung:
16.08.89 Patentblatt 89/33

(84) Benannte Vertragsstaaten:
**DE ES FR GB IT**

(71) Anmelder: **WEGU Gummi- und
Kunststoffwerke Walter Dräbing KG
Mündener Strasse 31
D-3500 Kassel(DE)**

(72) Erfinder: **Dräbing, Walter
Am Schnepfenbusch 10
D-3501 Niestetal(DE)**
Erfinder: **Fiedler, Kurt
Raiffeisenstrasse 1
D-3501 Zierenberg(DE)**

(74) Vertreter: **Rehberg, Elmar, Dipl.-Ing.
Postfach 3162 Am Kirschberge 22
D-3400 Göttingen(DE)**

(54) **Gummilager für Federn, Achsen und ähnliche Teile an Kraftfahrzeugen.**

(57) Die Erfindung betrifft ein Gummilager für Federn, Achsen und ähnliche Teile an Kraftfahrzeugen, mit mindestens zwei Flanschteilen, die über einen Gummikörper miteinander unlösbar verbunden sind, wobei mindestens ein Flanschteil (3) als Kunststoffspritzteil ausgebildet ist und sich in Kraftwirkrichtung erstreckende Stege (7) aufweist, die radial ausladende Bereiche (5, 6) des Flanschteils (3) miteinander verbinden und gegeneinander abstützen.

EP 0 327 810 A2

Fig. 1

## Gummilager für Federn, Achsen und ähnliche Teile an Kraftfahrzeugen

Die Erfindung bezieht sich auf ein Gummilager für Federn, Achsen und ähnliche Teile an Kraftfahrzeugen, mit mindestens zwei Flanschteilen, die über einen Gummikörper miteinander unlösbar verbunden sind. Derartige Gummilager werden auch als Schublager, Schub-Verbundlager u. dgl. bezeichnet und können beispielsweise für die Auflagerung eines Federbeins eines Kraftfahrzeugs ausgebildet sein.

Ein bekanntes Gummilager der eingangs beschriebenen Art wird zur Federbeinlagerung eingesetzt. Es besitzt zwei Flanschteile und eine zylindrische Hülse, die sämtliche aus Metall, insbesondere Stahl, bestehen. Die Flanschteile weisen dabei eine komplizierte Formgebung auf, die durch Tiefziehen hergestellt wird und mehrere Abwinklungen, Abbiegungen und sonstige Verformungen aufweist. Durch diese komplizierte Formgebung wird nicht nur die Festigkeit der Flanschteile an sich erhöht, sondern es werden auch Räume, Kanten und Vorsprünge gebildet, die zur Ausfüllung mit dem Gummikörper nötig und vorgesehen sind. Der Gummikörper kann aus Gummi oder einem anderen elastomeren Werkstoff bestehen. Wichtig ist dabei, daß der Gummikörper mit den Flanschteilen, von denen in der Regel einer als Hülse ausgebildet ist, unlösbar verbunden ist. Es muß also eine Gummi/Metall-Verbindung hergestellt werden. Diese Verbindungstechnik ist an sich bekannt und es entstehen durch ihre Anwendung derartige Gummilager, wobei beispielsweise die innere Hülse zur Aufnahme eines Endes des Stoßdämpfers und ein erstes Flanschteil zur Aufnahme einer Schraubenfeder vorgesehen und ausgebildet sind, während der zweite Flanschteil zur Befestigung des Gummilagers an der Karosserie dient. Die komplizierte Formgebung der Flanschteile erfordert komplizierte Werkzeuge für den Tiefziehvorgang und auch die Herstellung der unlösbaren Verbindung durch Vulkanisation des Gummikörpers ist ein vergleichsweise aufwendiger Vorgang.

Solche Gummilager sind deshalb relativ teuer.

Der Erfindung liegt die Aufgabe zugrunde, ein Gummilager für die Kraftfahrzeugindustrie zu schaffen, welches bei preisgünstiger Herstellung trotzdem eine beanspruchungsgerechte Ausbildung aufweist.

Erfindungsgemäß wird dies dadurch erreicht, daß mindestens ein Flanschteil als Kunststoffspritzteil ausgebildet ist und sich in Kraftwirkrichtung erstreckende Stege aufweist, die radial ausladende Bereiche des Flanschteils miteinander verbinden und gegeneinander abstützen. Bei einem Schublager ist der eine Flanschteil als Hülse ausgebildet und besteht zweckmäßig nach wie vor aus Metall.

Der andere Flanschteil ist jedoch aus Kunststoffspritzteil ausgebildet und besitzt eine besondere Gestaltung, so daß dieses Kunststoffspritzteil das bisher aus Metall bestehende Flanschteil ersetzen kann. Zu diesem Zweck muß es sich in Kraftwirkrichtung erstreckende Stege aufweisen, damit dieses Flanschteil nicht mehr einer Biegebeanspruchung unterworfen ist, sondern im wesentlichen nur noch auf Zug und Druck beansprucht wird. Dieses Beanspruchungsart ist günstiger. Diese Stege verbinden die radial ausladenden Bereiche des Flanschteil miteinander und stützen sie gegenseitig ab, so daß ein kompaktes Kunststoffspritzteil entsteht. Bei diesem Schublager muß eine unlösbare Verbindung zwischen dem aus Kunststoff bestehenden Flanschteil, dem Gummikörper und der Hülse erzielt werden. Dies ist möglich durch einen Thermoplast-Elastomer-Verbund. Das Kunststoffspritzteil wird in der Form durch Spritzen hergestellt. Anschließend wird nach dem Einlegen der Hülse die Gummi- bzw. Elastomermischung eingespritzt und es findet durch Behandlung auf entsprechende Temperatur die Verbindung der Teile miteinander statt. Wenn ein Schub-Verbundlager hergestellt wird, sind neben der Hülse zwei weitere Flanschteile vorgesehen, die beide jeweils als Kunststoffspritzteil ausgebildet sind und eine versteifende Formgebung aufweisen.

Der Flanschteil kann durch einen sich radial erstreckenden, umlaufenden Kragen verstärkt sein, der wellenförmige Gestalt aufweist. Ein solcher umlaufender, wellenförmiger Kragen kann in radialer Richtung bei entsprechender Beanspruchung elastisch federnd nachgeben, so daß es durch die Beanspruchung nicht zu Anrissen und Zerstörungen in dem Kunststoffspritzteil kommen kann. Es versteht sich, daß dieser wellenförmige Kragen bei vergleichsweise hohen Belastungen eingesetzt wird. Dieser wellenförmige Kragen kann sinnvollerweise durchaus dort vorgesehen sein, wo die die radial ausladenden Bereiche verbindenden Stege angeordnet sind.

Es ist auch möglich, daß zwei oder alle Flanschteile des Gummilagers als Kunststoffspritzteile ausgebildet sind. Auch die Hülse kann damit als Kunststoffspritzteil vorgesehen sein, wenngleich sich solche Hülsen auch vergleichsweise preiswert nach wie vor aus Metall herstellen lassen.

Auch die radial ausladenden Bereiche des Flanschteils können wellenförmige Gestalt aufweisen, damit auch hier eine gewisse Nachgiebigkeit in radialer Richtung gegeben ist. Durch die Einbettung und Verbindung mit dem Gummikörper entsteht insgesamt ein beanspruchungsgerechtes, kompaktes Gummilager.

Die Kunststoffspritzteile können in Randbereichen lippenförmig ausgebildet und dadurch Bereiche des Gummikörpers voneinander abgesetzt sein, die aus unterschiedlichen Elastomerqualitäten bestehen. Diese lippenförmigen Randbereiche bilden in der Spritzform beim Einschießen des Elastomerwerkstoffs Dichtlippen, durch die eine saubere Trennung verschiedener Bereiche des Gummikörpers voneinander erzielt werden kann. So ist es damit möglich, z. B. einem Schub-Verbundlager den inneren ringförmigen Teil des Gummikörpers aus einer anderen Elastomerqualität herzustellen als den äußeren ringförmigen Teil des Gummikörpers.

Der Flanschteil kann auch zur Aufnahme einer Schraubenfeder ausgebildet sein. Es handelt sich dabei um den jetzt außenliegenden Flanschteil, wobei der innere Flanschteil zur Befestigung des Gummilagers ausgebildet ist und die Befestigungsschrauben 9 trägt. Dieses Schub-Verbundlager besitzt eine äußerst kompakte Form und spart Bauhöhe im Motorraum, so daß letztendlich die Motorhaube flacher gezogen werden kann. Der die Schraubenfeder aufnehmende Flanschteil kann eine Schräge entsprechend der Kontur der Schraubenfeder im eingefederten Zustand aufweisen.

Die Erfindung wird anhand einiger Ausführungsbeispiele weiter verdeutlicht und beschrieben. Es zeigen:

Figur 1 einen Schnitt durch ein Schublager,

Figur 2 einen Schnitt durch ein Schub-Verbundlager,

Figur 3 einen Schnitt durch ein Schublager in einer weiteren Ausführungsform,

Figur 4 eine Draufsicht auf das Schublager gemäß Figur 3 und

Figur 5 Einen Schnitt durch ein Schub-Verbundlager in einer weiteren Ausführungsform.

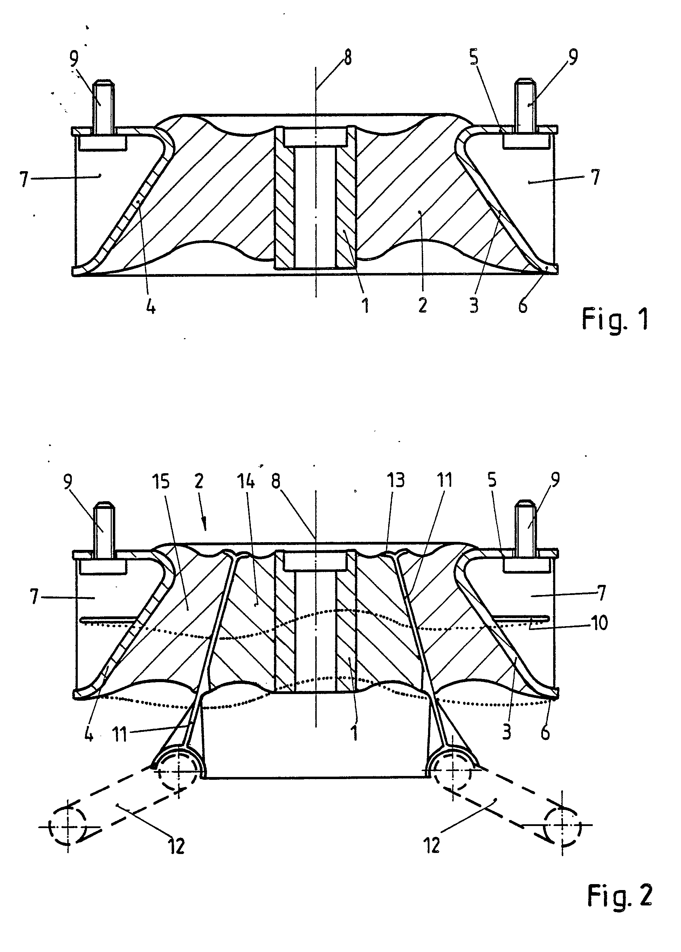

Das in Figur 1 dargestellte Gummilager ist als Schublager ausgebildet und weist im wesentlichen rotationssymmetrische Gestaltung auf. Es besitzt im Zentrum ein erstes Flanschteil 1, welches als Hülse ausgebildet und an dem das zu lagernde Teil des Kraftfahrzeugs angelenkt wird. Das als Hülse ausgebildete Flanschteil 1 kann aus Metall oder auch aus Kunststoff in Form eines Spritzteils ausgebildet sein. Das Flanschteil 1 ist von einem Gummikörper 2 aus Elastomerwerkstoff umschlossen, der federnd nachgiebig ist.

Der Gummikörper 2 ist mit dem Flanschteil 1 unlösbar verbunden. Um den Gummikörper 2 herum erstreckt sich ein weiteres Flanschteil 3, welches eine vergleichsweise kompliziertere Formgebung aufweist, einen kegelförmigen Teil 4 besitzt, der an seinen beiden Enden in mehr oder weniger radial ausladende Bereiche 5 und 6 übergeht. Die radial ausladenden Bereiche 5 und 6 sowie der kegelförmige Teil 4 sind durch Stege 7, die sich im wesentlichen in Kraftwirkrichtung, also parallel zu einer Mittelachse 8, erstrecken, angeordnet. Die Stege 7 sowie der kegelförmige Teil 4 und die radial ausladenden Bereiche 5 und 6 sind einstückig als Kunststoffspritzteil vorgesehen. Die Stege 7 sind in entsprechender Anzahl über den Umfang verteilt angeordnet. Sie steifen das Flanschteil 3 aus und nehmen Zug-und Druckkräfte auf. In dem radial ausladenden Bereich 5 sind Durchbrechungen vorgesehen, die dem Einsatz von Befestigungsschrauben 9 dienen, mit deren Hilfe das Gummilager an einem Teil der Kraftfahrzeugkarosserie o. dgl. befestigt wird.

In Figur 2 ist ein Schub-Verbundlager dargestellt, welches einen grundsätzlich ähnlichen Aufbau aufweist wie das Schublager gemäß Figur 1. Der Flanschteil 3 besitzt zusätzlich jedoch noch einen umlaufenden Kragen 10, der die Stege 7 noch einmal abstützt und gleichsam eine Bandage für den kegelförmigen Teil 4 bildet. Beim Auftreten von radial wirkenden Kräften verstärkt der Kragen 10 den kegelförmigen Teil 4 und damit den Flanschteil 3. Der Kragen 10 besitzt in Umfangsrichtung gesehen wellenförmige Gestalt, was hier durch eine gepunktete Linie verdeutlicht wurde. Der Kragen 10 ist damit begrenzt elastisch gestaltet, so daß auftretende Kraftspitzen nicht zu seiner Zerstörung führen. Es ist hier noch ein weiteres Flanschteil 11 vorgesehen, welches ebenfalls als Kunststoffspritzteil ausgebildet ist und zur Auflagerung einer Schraubenfeder 12 des Federbeins dient. An dem Flanschteil 1 ist nach wie vor der Stopdämpfer angelenkt. Das Flanschteil 11 besitzt im wesentlichen kegelförmige Gestalt und kann in Bereichen mit Dichtlippen 13 versehen sein, die auf die Formgebung der Form, in der der Elastomerwerkstoff eingespritzt wird, abgestimmt sind. Diese Dichtlippen 13 gestatten es, daß der Gummikörper 2 letztendlich einen inneren Ringkörper 14 aufweist, der aus einem anderen oder modifizierten Material gegenüber dem Material eines äußeren Ringkörpers 15 besteht. Auf diese Art und Weise ist es möglich, ein Schub-Verbundlager herzustellen, bei dem gezielt in Bereichen des Gummikörpers 2 unterschiedliche Materialien vorgesehen sind. Es versteht sich auch hier, daß sämtliche Teile unlösbar miteinander verbunden sind, so daß also eine Kunststoff-Elastomer-Verbindung erzielt ist. Bei dieser Ausführungsform kann der radial ausladende Bereich 6 des Flanschteils 3 - in Umlaufrichtung gesehen - ebenso einen wellenförmigen Verlauf aufweisen, wie dies bezüglich des umlaufenden Kragens 10 bereits beschrieben wurde. Auch dies ist durch eine gepunktete Linie angedeutet. Durch diese Gestaltung wird es möglich, daß das Flanschteil 3 als Kunststoffspritzteil ausgebildet ist und so ein Metallteil ersetzen kann.

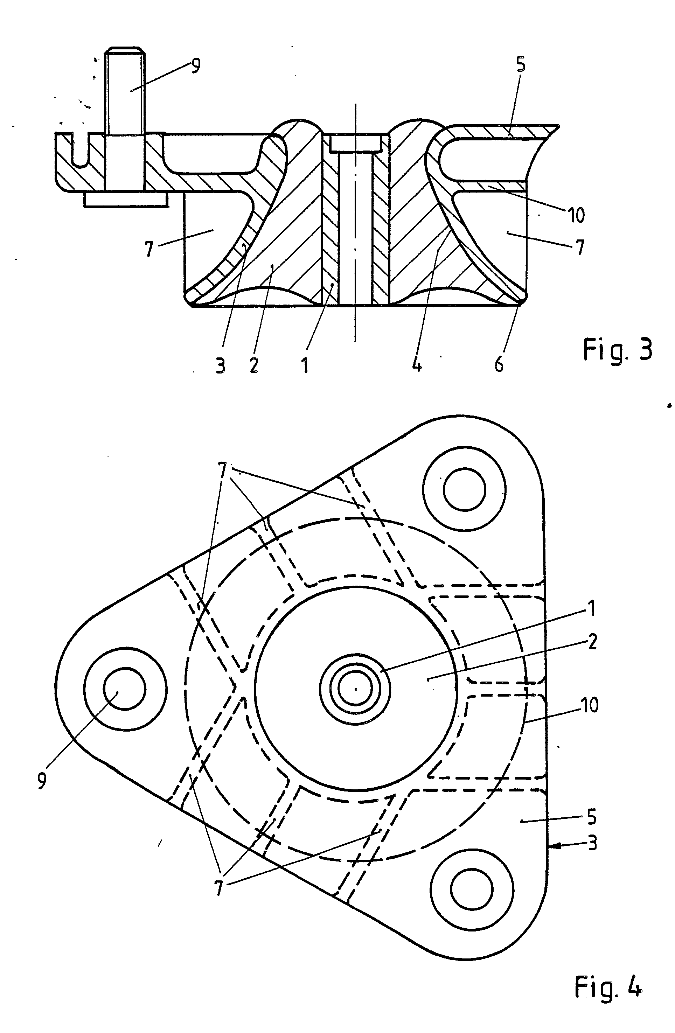

Figur 3 zeigt eine weitere Ausführungsform eines Schublagers mit einem Flanschteil 3, welches auch hier einen umlaufenden Kragen 190 aufweist. Auch hier werden die radial ausladenden Bereiche 5 und 6 sowie der umlaufende Kragen 10 durch über den Umfang verteilt angeordnete Stege 7 ausgesteift. Figur 4 zeigt eine Draufsicht auf ein solches Schublager. Es ist erkennbar, daß ein solches Lager in einer dreigeteilten Spritzform herstellbar ist, so daß die Stege 7 in entsprechender Ausrichtung und Anordnung vorgesehen sind.

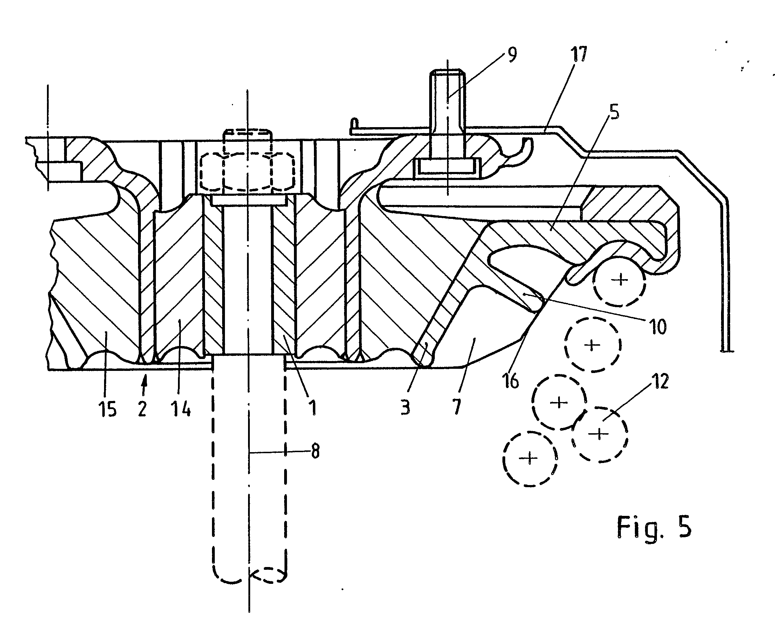

Bei dem in Figur 5 dargestellten Schub-Verbundlager sind die Befestigungsschrauben 9 an dem weiteren Flanschteil 11 vorgesehen, welches zwischen dem Flanschteil 3 und dem Flanschteil 1 angeordnet ist. Das äußere Flanschteil 3 ist zur Aufnahme und Abstützung der Schraubenfeder 12 ausgebildet und weist eine Schräge 16 auf, die der Kontur der Schraubenfeder in eingefedertem Zustand entspricht. Auf diese Art und Weise wird ein Teil der Bauhöhe des Gummilagers - im Gegensatz zu der Ausführungsform gemäß Figur 2 - frei für die Anordnung der Schraubenfeder 12. Insgesamt entsteht damit eine äußerst kompakt bauende Einheit, die Bauhöhe im Motorraum spart. Die Abdeckung nach außen erfolgt durch einen Federbein-Dom 17. Dieser kann ebenfalls als Kunststoffspritzteil ausgebildet sein.

**Ansprüche**

1. Gummilager für Federn, Achsen und ähnliche Teile an Kraftfahrzeugen, mit mindestens zwei Flanschteilen, die über einen Gummikörper miteinander unlösbar verbunden sind, dadurch gekennzeichnet, daß mindestens ein Flanschteil (3) als Kunststoffspritzteil ausgebildet ist und sich in Kraftwirkrichtung erstreckende Stege (7) aufweist, die radial ausladende Bereiche (5, 6) des Flanschteils (3) miteinander verbinden und gegeneinander abstützen.

2. Gummilager nach Anspruch 1, dadurch gekennzeichnet, daß der Flanschteil (3) durch einen sich radial erstreckenden umlaufenden Kragen (10) verstärkt ist, der wellenförmige Gestalt aufweist.

3. Gummilager nach Anspruch 1 oder 2, dadurch gekennzeichnet, daß zwei oder alle Flanschteile (3, 11 bzw. 3, 11, 1) des Gummilagers als Kunststoffspritzteile ausgebildet sind.

4. Gummilager nach Anspruch 1 bis 3, dadurch gekennzeichnet, daß die radial ausladenden Bereiche (6) des flanschteils (3) wellenförmige Gestalt aufweisen.

5. Gummilager nach Anspruch 1 bis 4, dadurch gekennzeichnet, daß die Kunststoffspritzteile in Randbereichen lippenförmig ausgebildet und dadurch Bereiche des Gummikörpers (2) voneinander abgesetzt sind, die aus unterschiedlichen Elastomerqualitäten bestehen.

6. Gummilager nach Anspruch 1 bis 5, dadurch gekennzeichnet, daß der Flanschteil (3) zur Aufnahme einer Schraubenfeder (12) ausgebildet ist.

7. Gummilager nach Anspruch 6, dadurch gekennzeichnet, daß der die Schraubenfeder (12) aufnehmende Flanschteil (3) eine Schräge (16) entsprechend der Kontur der Schraubenfeder im eingefederten Zustand aufweist.

Fig. 1

Fig. 2

Fig. 3

Fig. 4

Fig. 5

EP 0 327 810 A2